# EUROPEAN PATENT APPLICATION

(11) **EP 3 910 040 A1**
(43) Date of publication of application: **17.11.2021**
(21) Application number: 20738388.6
(22) Date of filing: 10.01.2020
(51) Int. Cl.: C09K 3/00, C09K 3/30, C09K 5/04

(54) **COMPOSITION CONTAINING CIS-1,2-DIFLUOROETHYLENE**

(30) Priority: 11.01.2019 JP 2019003476
(71) Applicant: DAIKIN INDUSTRIES, LTD., Osaka-shi, Osaka 530-8323 (JP)
(72) Inventor: TAKAHASHI, Kazuhiro, Osaka-shi, Osaka 530-8323 (JP)
(74) Representative: Hoffmann Eitle
(86) International application number: PCT/JP2020/000599
(87) International publication number: WO 2020/145377

(57) **Abstract**

The invention provides a novel composition comprising cis-1,2-difluoroethylene. The invention provides the following: a composition comprising cis-1,2-difluoroethylene (HFO-1132(Z)) and at least one additional compound; the composition that is an azeotropic or azeotrope-like composition; and use of the composition as a heat transfer medium, a foaming agent, or a propellant.

## Description

### Technical Field

The present disclosure relates to a composition that comprises cis-1,2-difluoroethylene.

### Background Art

Patent Literature (PTL) 1 discloses compositions that comprise cis-1,2-difluoroethylene, for use in refrigeration, air-conditioning, and heat pump systems. PTL 2 discloses working media for heat cycles comprising an azeotrope-like composition comprising (Z)-1,2-difluoroethylene and 1,1,1,2-tetrafluoroethane and/or 2,3,3,3-tetrafluoropropene.

### Citation List

### Patent Literature

PTL 1: U.S. Patent Publication No. 2011/0252801
PTL 2: JP2016-011423A

### Summary of Invention

### Technical Problem

An object of the present disclosure is to provide a novel composition that comprises cis-1,2-difluoroethylene.

### Solution to Problem

Item 1. A composition comprising cis-1,2-difluoroethylene (HFO-1132(Z)) and an additional compound, the additional compound being at least one member selected from the group consisting of 1-chloro-1,1,2-trifluoroethane (HCFC-133), 2-chloro-1,1,1-trifluoroethane (HCFC-133b), 1,1-dichloro-2,2,2-trifluoroethane (HCFC-123), 1,2-difluoroethane (HFC-152), 1,1,2-trifluoroethane (HFC-143), fluoromethane (HFC-41), chlorodifluoromethane (HCFC-22), ethylene, acetylene, 1-chloro-1,2-difluoroethane (HCFC-142a), 1,1,2-trifluoroethylene (HFO-1123), fluoroethylene (HFO-1141), 1,1-difluoroethylene (HFO-1132a), and 1-chloro-2,2-difluoroethylene (HCFO-1122).

Item 2. The composition according to Item 1, comprising the additional compound in a total amount of 10 mass% or less based on the total amount of the HFO-1132(Z) and the additional compound, defined as 100 mass%.

Item 3. The composition according to Item 1 or 2, comprising the additional compound in a total amount of 1 mass% or less based on the total amount of the HFO-1132(Z) and the additional compound, defined as 100 mass%.

Item 4. A composition comprising cis-1,2-difluoroethylene (HFO-1132(Z)), wherein the composition comprises cis-1,2-difluoroethylene (HFO-1132(Z)) and an additional compound, the additional compound being at least one member selected from the group consisting of trans-1,2-difluoroethylene (HFO-1132(E)), 1-chloro-1,1,2-trifluoroethane (HCFC-133), 2-chloro-1,1,1-trifluoroethane (HCFC-133b), 1,1-dichloro-2,2,2-trifluoroethane (HCFC-123), 1,1-difluoroethane (HFC-152a), 1,2-difluoroethane (HFC-152), fluoroethane (HFC-161), 1,1,1-trifluoroethane (HFC-143a), 1,1,2-trifluoroethane (HFC-143), 1,1,1,2-tetrafluoroethane (HFC-134a), difluoromethane (HFC-32), pentafluoroethane (HFC-125), fluoromethane (HFC-41), chlorodifluoromethane (HCFC-22), ethylene, propylene, acetylene, 1-chloro-1,2-difluoroethane (HCFC-142a), 3,3,3-trifluoropropene (HFO-1243zf), 2,3,3,3-tetrafluoropropene (HFO-1234yf), 1,3,3,3-tetrafluoropropene (HFO-1234ze), 1,2,3,3,3-pentafluoropropene (HFO-1225ye), 1,1,2-trifluoroethylene (HFO-1123), fluoroethylene (HFO-1141), 1,1-difluoroethylene (HFO-1132a), 1-chloro-2,2-difluoroethylene (HCFO-1122), and 1-chloro-1,2-difluoroethylene (HCFO-1122a), and
wherein the composition comprises the additional compound in a total amount of less than 1 mass% based on the total amount of the HFO-1132(Z) and the additional compound, defined as 100 mass%.

Item 5. The composition according to any one of Items 1 to 4, which is an azeotropic or azeotrope-like composition.

Item 6. Use of the composition of any one of Items 1 to 5 as a heat transfer medium, a foaming agent, or a propellant.

### Advantageous Effects of Invention

The present disclosure provides a novel composition that comprises cis-1,2-difluoroethylene.

### Description of Embodiments

### Definition of Terms

In the present specification, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include hydrofluoroolefins (HFO), hydrochlorofluoroolefins (HCFO), chlorofluorocarbons (CFC), hydrochlorofluorocarbons (HCFC), and hydrofluorocarbons (HFC). Non-fluorocarbon compounds include propane (R290), propylene (R1270), butane (R600), isobutane (R600a), carbon dioxide (R744), and ammonia (R717).

In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil.

In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

In the present specification, the term "azeotrope-like composition" refers to a composition that can be treated substantially as an azeotropic composition. More specifically, the term "azeotrope-like composition" as used herein refers to a constant boiling mixture or a substantially constant boiling mixture of two or more substances that behave substantially as a single substance. One of the characteristics of azeotrope-like compositions is that the formulation of vapor generated by evaporation or distillation of the liquid substantially does not undergo a change from the formulation of the liquid. That is, in the present specification, a mixture that boils, distills, or refluxes without substantial change in formulation is referred to as an "azeotrope-like composition." More specifically, in the present disclosure, a composition is defined as an azeotrope-like composition when the difference between the bubble point vapor pressure of the composition and the dew point vapor pressure of the composition at a specific temperature is 3% or less (based on the bubble point pressure).

In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" (refrigerator) refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

### 1. Composition

### 1.1 Additional Compound

The present disclosure discloses a composition (also referred to below as the "first composition") comprising cis-1,2-difluoroethylene (HFO-1132(Z)) and, in addition to this, an additional compound, the additional compound being at least one member selected from the group consisting of 1-chloro-1,1,2-trifluoroethane (HCFC-133), 2-chloro-1,1,1-trifluoroethane (HCFC-133b), 1,1-dichloro-2,2,2-trifluoroethane (HCFC-123), 1,2-difluoroethane (HFC-152), 1,1,2-trifluoroethane (HFC-143), fluoromethane (HFC-41), chlorodifluoromethane (HCFC-22), ethylene, acetylene, 1-chloro-1,2-difluoroethane (HCFC-142a), 1,1,2-trifluoroethylene (HFO-1123), fluoroethylene (HFO-1141), 1,1-difluoroethylene (HFO-1132a), and 1-chloro-2,2-difluoroethylene (HCFO-1122) (also referred to below as "additional compound 1").

The first composition is a composition comprising refrigerants. Cis-1,2-difluoroethylene (HFO-1132(Z)) and additional compound 1 are refrigerants themselves.

The first composition has a global warming potential (GWP) that is lower than, and a coefficient of performance (COP) and refrigerating capacity that are equivalent to or higher than, those of conventionally used refrigerants (e.g., R22, R12, R32, R134a, R410A, R407C, R404A, R507A, R502). Therefore, the first composition is useful as an alternative product or the like for the conventionally used refrigerants, and can be preferably used as an alternative product or the like, in particular, for HFC-134a.

From the viewpoint of reducing the global warming potential (GWP) and ozone depletion potential (ODP), the total amount of additional compound 1 contained in the first composition is preferably 10 mass% or less, more preferably 1 mass% or less, even more preferably less than 1 mass%, and particularly preferably 0.1 mass% or less, based on the total amount of HFO-1132(Z) and additional compound 1, defined as 100 mass%. The lower limit is preferably, but is not limited to, 0.001 mass% or more.

The total amount of additional compound 1 contained in the first composition is preferably 10 mass% or less to achieve a GWP that is further lower than, and a COP and refrigerating capacity that are equivalent to or higher than, those of the conventionally used refrigerants.

Further, the present disclosure discloses a composition (also referred to below as the "second composition") comprising cis-1,2-difluoroethylene (HFO-1132(Z)),
wherein the composition comprises cis-1,2-difluoroethylene (HFO-1132(Z)), and, in addition to this, an additional compound, the additional compound being at least one member selected from the group consisting of trans-1,2-difluoroethylene (HFO-1132(E)), 1-chloro-1,1,2-trifluoroethane (HCFC-133), 2-chloro-1,1,1-trifluoroethane (HCFC-133b), 1,1-dichloro-2,2,2-trifluoroethane (HCFC-123), 1,1-difluoroethane (HFC-152a), 1,2-difluoroethane (HFC-152), fluoroethane (HFC-161), 1,1,1-trifluoroethane (HFC-143a), 1,1,2-trifluoroethane (HFC-143), 1,1,1,2-tetrafluoroethane (HFC-134a), difluoromethane (HFC-32), pentafluoroethane (HFC-125), fluoromethane (HFC-41), chlorodifluoromethane (HCFC-22), ethylene, propylene, acetylene, 1-chloro-1,2-difluoroethane (HCFC-142a), 3,3,3-trifluoropropene (HFO-1243zf), 2,3,3,3-tetrafluoropropene (HFO-1234yf), 1,3,3,3-tetrafluoropropene (HFO-1234ze), 1,2,3,3,3-pentafluoropropene (HFO-1225ye), 1,1,2-trifluoroethylene (HFO-1123), fluoroethylene (HFO-1141), 1,1-difluoroethylene (HFO-1132a), 1-chloro-2,2-difluoroethylene (HCFO-1122), and 1-chloro-1,2-difluoroethylene (HCFO-1122a) (also referred to below as "additional compound 2"), and
wherein the composition comprises the additional compound in a total amount of less than 1 mass% based on the total amount of the HFO-1132(Z) and the additional compound, defined as 100 mass%.

The second composition is a composition comprising refrigerants. Cis-1,2-difluoroethylene (HFO-1132(Z)) and additional compound 2 are refrigerants themselves.

The second composition has a GWP that is lower than, and a COP and refrigerating capacity that are equivalent to or higher than, those of the conventionally used refrigerants. Therefore, the second composition is useful as an alternative product or the like for the conventionally used refrigerants, and can be preferably used as an alternative product or the like, in particular, for HFC-134a.

From the viewpoint of reducing the global warming potential (GWP) and ozone depletion potential (ODP), the total amount of additional compound 2 contained in the second composition is preferably less than 1 mass%, and more preferably 0.1 mass% or less, based on the total amount of HFO-1132(Z) and additional compound 2, defined as 100 mass%. The lower limit is preferably, but is not limited to, 0.001 mass% or more.

With the above total amount of additional compound 2 as well, the second composition achieves a GWP that is lower than, and a COP and refrigerating capacity that are equivalent to or higher than, those of the conventionally used refrigerants.

In both the first composition and the second composition, the total content of HFO-1132(Z) and the additional compound is preferably 10 mass% or more and 100 mass% or less, more preferably 30 mass% or more and 100 mass% or less, and even more preferably 50 mass% or more and 100 mass% or less, based on the entire composition (100 mass%), from the viewpoint of obtaining refrigerant performance (e.g., COP, refrigerating capacity) of HFO-1132(Z).

In the present specification, the first composition and the second composition are collectively referred to simply as the "composition," unless otherwise specified.

### 1.2 Azeotropic or Azeotrope-like Composition

The composition according to the present disclosure is preferably an azeotropic or azeotrope-like composition. The azeotropic or azeotrope-like composition can serve as an important composition in azeotropic distillation of a mixture of HFO-1132(Z) and the additional compound to separate the additional compound from HFO-1132(Z).

The azeotropic distillation is a method of concentration or separation of a target product by operating a distillation column under conditions in which an azeotropic or azeotrope-like composition is separated. In some cases, azeotropic distillation can allow distillation of only the target component for separation. In other cases, however, azeotropic distillation occurs only when another component that forms an azeotropic mixture with one or more of the target components for separation is added from the outside. In the present specification, both the former and the latter cases are referred to as "azeotropic distillation."

For example, the additional compound can be separated from HFO-1132(Z) by extracting an azeotropic or azeotrope-like composition that comprises HFO-1132(Z) and the additional compound from a composition that comprises at least HFO-1132(Z) and the additional compound by azeotropic distillation.

A mixture of HFO-1132(Z) and the additional compound is an azeotrope-like composition when the mass ratio of HFO-1132(Z) to the additional compound is HFO-1132(Z):the total of the additional compound = 99:1 to 99.99:0.01, although it depends on the conditions. That is, the mixture is an azeotrope-like composition when it comprises 99 to 99.99 mass% of HFO-1132(Z) based on the total amount of HFO-1132(Z) and the additional compound, defined as 100 mass%.

Further, the mixture is an azeotropic composition when it comprises a required amount of HFO-1132(Z) based on the total amount of HFO-1132(Z) and the additional compound, defined as 100 mass%, depending on, for example, the pressure, the temperature, and the type of the additional compound.

### 1.3 Heat Transfer Medium

The composition according to the present disclosure, which has a low GWP and sufficient stability, can be used as a heat transfer medium. The composition according to the present disclosure has a GWP that is lower than, and a COP and refrigerating capacity that are equivalent to or higher than, those of conventionally used refrigerants. Therefore, when the composition according to the present disclosure is used as a heat transfer medium, the composition according to the present disclosure may also be suitably used as a refrigerant or a component of a refrigerant, that can replace conventionally used refrigerants, such as R22, R12, R32, R134a, R410A, R407C, R404A, R507A, and R502.

The composition according to the present disclosure for use as a heat transfer medium may comprise one or more other components. The composition according to the present disclosure may also be used to obtain a working fluid for a refrigerating machine by further mixing with at least a refrigeration oil (the composition according to the present disclosure in this case is referred to as the "refrigerant composition according to the present disclosure").

The refrigerant composition according to the present disclosure may optionally comprise one or more of the following other components. The other components are not limited. Specific examples include water, tracers, ultraviolet fluorescent dyes, stabilizers, and polymerization inhibitors.

When the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, the amount of refrigeration oil contained in the refrigerant composition according to the present disclosure is preferably 0 to 1 mass%, and more preferably 0 to 0.1 mass%, based on the entire composition.

The refrigerant composition according to the present disclosure may comprise a small amount of water. The water content of the refrigerant composition is preferably 0.1 mass% or less based on the entire refrigerant composition. A small amount of water contained in the refrigerant composition stabilizes double bonds in the molecules of unsaturated fluorocarbon compounds that can be present in the refrigerant, and makes it less likely that the unsaturated fluorocarbon compounds will become oxidized, thus increasing the stability of the refrigerant composition.

A tracer is added to the refrigerant composition according to the present disclosure at a detectable concentration so that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.
FC-14 (tetrafluoromethane, CF₄)
HCC-40 (chloromethane, CH₃Cl)
HFC-23 (trifluoromethane, CHF₃)
HFC-134 (1,1,2,2-tetrafluoroethane, CHF₂CHF₂)
HFC-245fa (1,1,1,3,3-pentafluoropropane, CF₃CH₂CHF₂)
HFC-236fa (1,1,1,3,3,3-hexafluoropropane, CF₃CH₂CF₃)
HFC-236ea (1,1,1,2,3,3-hexafluoropropane, CF₃CHFCHF₂)
HFC-227ea (1,1,1,2,3,3,3-heptafluoropropane, CF₃CHFCF₃)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The refrigerant composition according to the present disclosure may comprise one or more tracers at a total concentration of about 10 parts per million by weight (ppm) to about 1000 ppm, based on the entire refrigerant composition. The refrigerant composition according to the present disclosure may preferably comprise one or more tracers at a total concentration of about 30 ppm to about 500 ppm, and more preferably about 50 ppm to about 300 ppm, based on the entire refrigerant composition.

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01 to 5 mass%, and more preferably 0.05 to 2 mass%, based on the entire refrigerant composition.

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01 to 5 mass%, and more preferably 0.05 to 2 mass%, based on the entire refrigerant composition.

The composition according to the present disclosure can also be used as a working fluid for a refrigerating machine containing a refrigeration oil (this composition is referred to as the "refrigeration oil-containing working fluid according to the present disclosure"). The refrigeration oil-containing working fluid according to the present disclosure comprises at least the refrigerant composition according to the present disclosure and a refrigeration oil, for use as a working fluid in a refrigerating machine. Specifically, the refrigeration oil-containing working fluid according to the present disclosure is obtained by mixing a refrigeration oil used in a compressor of a refrigerating machine with the refrigerant or the refrigerant composition. The refrigeration oil-containing working fluid generally comprises 10 to 50 mass% of refrigeration oil.

The refrigeration oil-containing working fluid according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 to 400 cSt at 40°C is preferable from the standpoint of lubrication.

The refrigeration oil-containing working fluid according to the present disclosure may further optionally contain at least one additive. Examples of additives include compatibilizing agents described below.

The refrigeration oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

The composition according to the present disclosure can be used as a heat transfer medium in systems. Examples of the systems include, but are not limited to, air-conditioning system, freezers, refrigerators, heat pumps, water coolers, flooded evaporator cooling apparatus, direct expansion cooling apparatus, centrifugal cooling apparatus, mobile refrigerators, mobile air-conditioning system, and combinations thereof.

### 1.4 Foaming Agent

The composition according to the present disclosure, which has a low GWP and sufficient stability, can be used as a foaming agent. The use of the composition according to the present disclosure as a foaming agent achieves a GWP that is lower than that of known foaming agents.

When the composition according to the present disclosure is used as a foaming agent, the composition may comprise other foaming agents.

Examples of other foaming agents that can be used in combination include, but are not limited to, halogenated hydrocarbons, such as HFC227ea (1,1,1,2,3,3,3-heptafluoropropane) and HCFO-1233zd (1-chloro-3,3,3-trifluoropropene); and inert gases, such as air, nitrogen, and carbon dioxide.

The composition according to the present disclosure may comprise water. The addition of water allows carbon dioxide gas to be generated during foaming, which is preferable since carbon dioxide gas contributes to foaming. However, if too much water is added, the heat-insulating performance etc. of the foam may be undesirably degraded.

The water content is generally about 60 mass% or less based on the entire composition (100 mass%). Within this range, a highly heat-insulating foam can be produced more reliably.

The composition according to the present disclosure may also optionally comprise a decomposition inhibitor. Preferable examples of decomposition inhibitors include, but are not limited to, nitro compounds, such as nitrobenzene and nitromethane; aromatic hydrocarbons, such as α-methylstyrene and p-isopropenyltoluene; aliphatic unsaturated hydrocarbons, such as isoprene and 2,3-dimethylbutadiene; epoxy compounds, such as 1,2-butylene oxide and epichlorohydrin; phenolic compounds, such as p-t-butyl catechol and 2,6-di-t-butyl-p-cresol; and chloroacetate compounds, such as isopropyl chloroacetate.

The content of the decomposition inhibitor can be appropriately set according to the type and the like of the decomposition inhibitor. The content is generally about 0.05 to 5 mass%, based on the entire composition (100 mass%).

### 1.5 Propellant

The composition according to the present disclosure, which has a low GWP and sufficient stability, can be used as a propellant. The use of the composition according to the present disclosure as a propellant achieves a GWP that is lower than that of known propellants; thus, it is possible to provide a propellant that substantially does not contribute to global warming.

When the composition according to the present disclosure is used as a propellant, the composition may optionally comprise other compounds.

Examples of other compounds include, but are not limited to, HFC227ea (1,1,1,2,3,3,3-heptafluoropropane).

When the composition according to the present disclosure is used as a propellant, the propellant may be incorporated into an aerosol. Examples of aerosols include, but are not limited to, various industrial aerosols, such as contact cleaners, dusters, lubricant sprays, and other sprayable compositions; and aerosols for consumer use, such as personal care products, household products, pharmaceutical aerosols, and automotive products. For medical aerosols, it is possible to further comprise other components such as drugs (e.g., beta agonists, corticosteroids, and other drugs), surfactants, solvents, other propellants, flavors, and excipients.

### 2. Separation Method

The present disclosure also discloses a method for separating these components using the composition described above.

For example, the additional compound can be separated from HFO-1132(Z) by extracting an azeotropic or azeotrope-like composition that comprises HFO-1132(Z) and the additional compound from a composition that comprises at least HFO-1132(Z) and the additional compound by azeotropic distillation.

The embodiments are described above; however, it will be understood that various changes in forms and details can be made without departing from the spirit and scope of the claims.

### Examples

The present disclosure is described in more detail below with reference to Examples. However, the present disclosure is not limited to the Examples.

### Example 1

Tables 1 and 2 show Examples of compositions comprising HFO-1132(Z) and the additional compound.

In the tables, the formulations are based on the mass ratio of each compound.

The GWP was evaluated based on the values (100-year values) in the Intergovernmental Panel on Climate Change (IPCC), fifth report. Although the report does not state the GWPs of some HFOs, including HFO-1132(E) and HFO-1132(Z), the GWPs of HFO-1132a (GWP=1 or less) and HFO-1123 were both assumed to be 1.

The coefficient of performance (COP) and refrigerating capacity were compared with those of a conventional refrigerant, i.e., HFC-134a.

The COP and refrigerating capacity were calculated using the following refrigeration cycle conditions: evaporation temperature: 10°C, condensation temperature: 45°C, degree of superheating: 5°C, degree of subcooling: 5°C, compressor efficiency: 70%. Peng-Robinson was used for the physical model.

Tables 1 to 2 below show that all of the compositions had a low GWP, a COP that is higher than that of HFC-134a (conventional refrigerant), and refrigerating capacity that is equivalent to that of HFC-134a (conventional refrigerant), indicating that these compositions are useful as a heat transfer medium for refrigerants etc.

**Table 1**

| Component | Formulation | GWP | COP | Refrigerating capacity |
|---|---|---|---|---|
| | | | Comparison with HFC-134a | |
| HFO-1132(Z)/HFC143a | 99/1 | 49 | 1.046 | 0.990 |
| H FO-1132(Z)/H FO-1123 | 99/1 | 1 | 1.045 | 0.992 |
| HFO-1132(Z)/HFC152a | 99/1 | 2 | 1.047 | 0.985 |
| HFO-1132(Z)/HFC161 | 99/1 | 1 | 1.046 | 0.990 |
| HFO-1132(Z)/HFC143 | 99/1 | 4 | 1.047 | 0.979 |
| HFO-1132(Z)/HFC143 | 90/10 | 34 | 1.053 | 0.924 |
| HFO-1132(Z)/HCFC133b | 99/1 | 5 | 1.047 | 0.981 |
| HFO-1132(Z)/HCFC133 | 99/1 | 5 | 1.047 | 0.982 |
| HFO-1132(Z)/HCFC123 | 99/1 | 2 | 1.047 | 0.980 |
| HFO-1132(Z)/HCFC142a | 99/1 | 21 | 1.048 | 0.979 |
| HFO-1132(Z)/HFC152 | 99/1 | 1 | 1.048 | 0.986 |
| HFO-1132(Z)/HFC152 | 70/30 | 6 | 1.046 | 0.986 |
| HFO-1132(Z)/HFC152 | 50/50 | 9 | 1.045 | 0.995 |
| HFO-1132(Z)/HFC152 | 30/70 | 12 | 1.041 | 1.016 |
| HFO-1132(Z)/HFC152 | 1/99 | 16 | 1.037 | 1.037 |
| HFO-1132(Z)/HFC32 | 99/1 | 8 | 1.032 | 1.058 |
| HFO-1132(Z)/HFC41 | 99/1 | 2 | 1.027 | 1.078 |
| HFO-1132(Z)/HCFC22 | 99/1 | 19 | 1.046 | 0.989 |
| HFO-1132(Z)/HFC134a | 99/1 | 14 | 1.046 | 0.985 |
| HFO-1132(Z)/HFC125 | 99/1 | 33 | 1.046 | 0.989 |
| HFO-1132(Z)/HFO1234yf | 99/1 | 1 | 1.046 | 0.986 |
| HFO-1132(Z)/HFO1225ye | 99/1 | 1 | 1.046 | 0.984 |
| HFO-1132(Z)/HFO-1234ze | 99/1 | 1 | 1.046 | 0.984 |
| HFO-1132(Z)/HFO-1141 | 99/1 | 1 | 1.044 | 0.999 |
| HFO-1132(Z)/HFO1243zf | 99/1 | 1 | 1.046 | 0.985 |
| HFO-1132(Z)/HFO-1132a | 99/1 | 1 | 1.043 | 0.996 |
| HFO-1132(Z)/HCFO-1122 | 99/1 | 1 | 1.047 | 0.984 |
| HFO-1132(Z)/HCFO-1122a | 99/1 | 1 | 1.047 | 0.980 |
| HFO-1132(Z)/HFO-1132(E) | 99/1 | 1 | 1.045 | 0.995 |
| HFO-1132(Z)/ethylene | 99/1 | 1 | 1.034 | 1.014 |
| HFO-1132(Z)/propylene | 99/1 | 1 | 1.046 | 0.993 |
| HFO-1132(Z)/acetylene | 99/1 | 1 | 1.038 | 1.016 |

**Table 2**

| Component | Formulation | GWP | COP | Refrigerating capacity |
|---|---|---|---|---|
| | | | Comparison with HFC-134a | |
| HFO-1132(Z)/HFC143a | 99.9/0.1 | 6 | 1.047 | 0.986 |
| HFO-1132(Z)/HFO-1123 | 99.9/0.1 | 1 | 1.046 | 0.986 |
| HFO-1132(Z)/HFC152a | 99.9/0.1 | 1 | 1.047 | 0.985 |
| HFO-1132(Z)/HFC161 | 99.9/0.1 | 1 | 1.047 | 0.986 |
| HFO-1132(Z)/HFC143 | 99.9/0.1 | 1 | 1.047 | 0.985 |
| HFO-1132(Z)/HCFC133b | 99.9/0.1 | 1 | 1.047 | 0.985 |
| HFO-1132(Z)/HCFC133 | 99.9/0.1 | 1 | 1.047 | 0.985 |
| HFO-1132(Z)/HCFC123 | 99.9/0.1 | 1 | 1.047 | 0.985 |
| HFO-1132(Z)/HCFC142a | 99.9/0.1 | 3 | 1.047 | 0.985 |
| HFO-1132(Z)/HFC152 | 99.9/0.1 | 1 | 1.047 | 0.985 |
| HFO-1132(Z)/HFC32 | 99.9/0.1 | 2 | 1.046 | 1.058 |
| HFO-1132(Z)/HFC41 | 99.9/0.1 | 1 | 1.046 | 1.078 |
| HFO-1132(Z)/HCFC22 | 99.9/0.1 | 3 | 1.047 | 0.989 |
| HFO-1132(Z)/HFC134a | 99.9/0.1 | 2 | 1.047 | 0.985 |
| HFO-1132(Z)/HFC125 | 99.9/0.1 | 4 | 1.047 | 0.989 |
| HFO-1132(Z)/HFO1234yf | 99.9/0.1 | 1 | 1.047 | 0.986 |
| HFO-1132(Z)/HFO1225ye | 99.9/0.1 | 1 | 1.047 | 0.984 |
| HFO-1132(Z)/HFO-1234ze | 99.9/0.1 | 1 | 1.047 | 0.984 |
| HFO-1132(Z)/HFO-1141 | 99.9/0.1 | 1 | 1.046 | 0.999 |
| HFO-1132(Z)/HFO1243zf | 99.9/0.1 | 1 | 1.047 | 0.985 |
| HFO-1132(Z)/HFO-1132a | 99.9/0.1 | 1 | 1.046 | 0.996 |
| HFO-1132(Z)/HCFO-1122 | 99.9/0.1 | 1 | 1.047 | 0.984 |
| HFO-1132(Z)/HCFO-1122a | 99.9/0.1 | 1 | 1.047 | 0.985 |
| HFO-1132(Z)/HFO-1132(E) | 99.9/0.1 | 1 | 1.046 | 0.986 |
| HFO-1132(Z)/ethylene | 99.9/0.1 | 1 | 1.045 | 1.014 |
| HFO-1132(Z)/propylene | 99.9/0.1 | 1 | 1.047 | 0.993 |
| HFO-1132(Z)/acetylene | 99.9/0.1 | 1 | 1.046 | 1.016 |

## Claims

1. A composition comprising cis-1,2-difluoroethylene (HFO-1132(Z)) and an additional compound, the additional compound being at least one member selected from the group consisting of 1-chloro-1,1,2-trifluoroethane (HCFC-133), 2-chloro-1,1,1-trifluoroethane (HCFC-133b), 1,1-dichloro-2,2,2-trifluoroethane (HCFC-123), 1,2-difluoroethane (HFC-152), 1,1,2-trifluoroethane (HFC-143), fluoromethane (HFC-41), chlorodifluoromethane (HCFC-22), ethylene, acetylene, 1-chloro-1,2-difluoroethane (HCFC-142a), 1,1,2-trifluoroethylene (HFO-1123), fluoroethylene (HFO-1141), 1,1-difluoroethylene (HFO-1132a), and 1-chloro-2,2-difluoroethylene (HCFO-1122).

2. The composition according to claim 1, comprising the additional compound in a total amount of 10 mass% or less based on the total amount of the HFO-1132(Z) and the additional compound, defined as 100 mass%.

3. The composition according to claim 1 or 2, comprising the additional compound in a total amount of 1 mass% or less based on the total amount of the HFO-1132(Z) and the additional compound, defined as 100 mass%.

4. A composition comprising cis-1,2-difluoroethylene (HFO-1132(Z)),
wherein the composition comprises cis-1,2-difluoroethylene (HFO-1132(Z)) and an additional compound, the additional compound being at least one member selected from the group consisting of trans-1,2-difluoroethylene (HFO-1132(E)), 1-chloro-1,1,2-trifluoroethane (HCFC-133), 2-chloro-1,1,1-trifluoroethane (HCFC-133b), 1,1-dichloro-2,2,2-trifluoroethane (HCFC-123), 1,1-difluoroethane (HFC-152a), 1,2-difluoroethane (HFC-152), fluoroethane (HFC-161), 1,1,1-trifluoroethane (HFC-143a), 1,1,2-trifluoroethane (HFC-143), 1,1,1,2-tetrafluoroethane (HFC-134a), difluoromethane (HFC-32), pentafluoroethane (HFC-125), fluoromethane (HFC-41), chlorodifluoromethane (HCFC-22), ethylene, propylene, acetylene, 1-chloro-1,2-difluoroethane (HCFC-142a), 3,3,3-trifluoropropene (HFO-1243zf), 2,3,3,3-tetrafluoropropene (HFO-1234yf), 1,3,3,3-tetrafluoropropene (HFO-1234ze), 1,2,3,3,3-pentafluoropropene (HFO-1225ye), 1,1,2-trifluoroethylene (HFO-1123), fluoroethylene (HFO-1141), 1,1-difluoroethylene (HFO-1132a), 1-chloro-2,2-difluoroethylene (HCFO-1122), and 1-chloro-1,2-difluoroethylene (HCFO-1122a), and
wherein the composition comprises the additional compound in a total amount of less than 1 mass% based on the total amount of the HFO-1132(Z) and the additional compound, defined as 100 mass%.

5. The composition according to any one of claims 1 to 4, which is an azeotropic or azeotrope-like composition.

6. Use of the composition of any one of claims 1 to 5 as a heat transfer medium, a foaming agent, or a propellant.
